Europäisches Patentamt

European Patent Office

Office européen des brevets

(19)

(11) **EP 1 081 458 A2**

(12) **EUROPEAN PATENT APPLICATION**

(43) Date of publication:
07.03.2001 Bulletin 2001/10

(51) Int Cl.$^7$: **G01B 11/06**

(21) Application number: 00307250.1

(22) Date of filing: 23.08.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **31.08.1999 IL 13167199**

(71) Applicant: **CreoScitex Corporation Ltd.**
**Herzlia 46103 (IL)**

(72) Inventors:
• **Elior, Ariel**
**Modi'in (IL)**

• **Nacash, David**
**Kfar Yona 40300 (IL)**
• **Liberman, Moshe**
**Bat Yam (IL)**
• **Ronen, Josef**
**Herzlia (IL)**
• **Vashdi, Shmuel**
**Kfar Saba 44536 (IL)**

(74) Representative: **Freed, Arthur Woolf et al**
**Reginald W. Barker & Co.,**
**Clifford's Inn,**
**Fetter Lane**
**London EC4A 1BY (GB)**

(54) **Apparatus and method for edge detection**

(57)     A method for detecting an abrupt rising edge from a first smooth surface to a second smooth surface includes the steps of a) illuminating one of the first surface and the second surface with a light beam having a focal point generally at the second surface; b) measuring the intensity of the light reflected from the illuminated surface, the measured intensity being greater for light reflected from the first surface than for light reflected from the second surface; c) altering the relative position of the edge and the light beam; and repeating steps a) - c) until the measured intensity is above or below a pre-defined threshold. An apparatus for detecting the edge of a plate mounted on a support, the plate and the support forming a plate system, includes the following: an optical print head for illuminating the plate system with a light beam having a focal point generally at the plate, a detector for measuring the intensity of the light reflected from the plate system, and means for altering the relative position of the edge and the light beam. The optical print head includes a laser diode and a writing optical fiber connected to the laser diode. The optical print head includes a focus optical fiber and the detector includes a photodiode connected to said focus optical fiber.

FIG.2A

EP 1 081 458 A2

**Description**

**FIELD OF THE INVENTION**

The present invention relates to an apparatus and method for edge detection in general and to an apparatus and method for edge detection of an offset plate on a platesetter in particular.

**BACKGROUND OF THE INVENTION.**

A platesetter has a support, typically a drum or flat bed, on which a plate is mounted. The platesetter also has an optical head for exposing plates. One type of optical head is composed of an array of laser diodes coupled to optical fibers. The light coming out of the fibers is focused, using a specially designed lens, on the plate.

A typical platesetter is the commercially available Lotem from Scitex Corporation of Herzliya, Israel. Prior to exposing an offset plate on a platesetter, the plate is mounted on the support. In some cases, the plate is pre-punched before mounting, and loaded on the support according to the notches made by the punch. After exposure, the plates are mounted on the press machine using the same notches, which guarantee a perfect registration on the printed paper between the different color separations of a single image. In other cases, the plates are punched only after exposure, relative to the edges of the plate. In these cases, registration on press can be guaranteed only if the exposure of each plate will also be done relative to the plate edges.

When the plate is loaded on a platesetter having a drum support, its leading edge is pushed against two fixed pins mounted on the drum. This ensures registration in the direction parallel to the drum axis. In order to ensure registration in the perpendicular direction, the edge of the plate should be detected with an accuracy of approximately 20 microns ($\mu$m) in this direction.

Edge detection is a feature needed in many fields like wafer fabrication, printing, sewing, platesetters and more. Edge detection systems are described in US Patent No. 5,504,345 to Bartunek et al., US Patent No. 5,220,177 to Harris, US Patent No. 5,739,913 to Wallace.

US Patent No. 4,881,086 to Misawa describes a laser recorder with sheet edge detection. The edge detection works on the principle of the difference in reflectivity of the sheet and the drum on which it is carried. The drum is coated by a low reflectivity coating, so that the signal of the laser light reflected from the drum is much lower compared to the signal of the light reflected from the light sensitive media. A major disadvantage of this system is that the edge detection signal depends on the reflectivity properties of the sheet and the drum.

US Patent No. 5,248,992 to Ferschl describes an image forming apparatus that uses a print head including both writing optical fibers and an autofocus optical fiber. The autofocus fiber has a different numerical aperture than the writing optical fibers and is used for focus control. The light reflected from the media is detected by the same fiber that emits the light.

**SUMMARY OF THE INVENTION**

There is provided in accordance with a preferred embodiment of the present invention a method for detecting an abrupt rising edge from a first smooth surface to a second smooth surface. The method includes the steps of:

> a) illuminating one of the first surface and the second surface with a light beam having a focal point generally at the second surface;
> b) measuring the intensity of the light reflected from the illuminated surface, the measured intensity being greater for light reflected from the first surface than for light reflected from the second surface;
> c) altering the relative position of the edge and the light beam; and
> d) repeating steps a) - c) until the measured intensity is above or below a predefined threshold.

Moreover, the method is irrespective of the reflectivity of the second surface.

There is also provided in accordance with a preferred embodiment of the present invention a method for detecting the angle of an abrupt rising edge between a first smooth surface and a second smooth surface. The method includes the steps of:

> a) illuminating one of the first surface and the second surface with a light beam having a focal point generally at the second surface;
> b) measuring the intensity of the light reflected from the illuminated surface;
> c) altering the relative position of the edge and the light beam in a first direction;
> d) repeating steps a) - c) until the measured intensity is above or below a predefined threshold, thereby determining the location of the edge at a first position;
> e) altering the relative position of the edge and the light beam in a second direction transverse to the first direction;
> f) repeating steps a) - c) until the measured intensity is above or below a predefined threshold, thereby determining the location of the edge at a second position; and
> g) calculating the angle from the first position and the second position.

There is also provided in accordance with a preferred embodiment of the present invention a method for detecting the angle of an abrupt rising edge between a first smooth surface and a second smooth surface. The method includes the steps of:

a) illuminating one of the first surface and the second surface with a light beam having a focal point generally at the second surface;
b) making one of a first series of measurements of the intensity of the light reflected from the illuminated surface, the measurements being greater for light reflected from the first surface than for light reflected from the second surface;
c) altering the relative position of the edge and the light beam in a first direction;
d) illuminating one of the first surface and the second surface with the light beam;
e) making one of a second series of measurements of the intensity of the light reflected from the illuminated surface;
f) altering the relative position of the edge and the light beam in a second direction transverse to the first direction;
g) repeating steps a) - f) until one of the first series of measurements is above or below a predefined threshold, thereby determining the location of the edge at a first position and one of the second series of measurements is above or below a predefined threshold, thereby determining the location of the edge at a second position; and
h) calculating the angle from the first position and the second position.

There is also provided in accordance with a preferred embodiment of the present invention, a method for detecting the edge of a plate mounted on a support, the plate and support forming a plate system. The method includes the steps of:

a) illuminating the plate system with a light beam having a focal point generally at the plate;
b) measuring the intensity of the light reflected from the plate system, the measured intensity being greater for light reflected from the support than for light reflected from the plate;
c) altering the relative position of the edge and the light beam; and
d) repeating steps a) - c) until the measured intensity is above or below a predefined threshold.

Moreover, the method is irrespective of the reflectivity of the plate.
Furthermore, the support is a drum or a flat bed.
Similarly, there are provided methods for detecting the angle of the edge of a plate mounted on a support.
There is also provided in accordance with a preferred embodiment of the present invention a method for detecting the edge of a plate mounted on a support, the plate and the support forming a plate system.

The method comprising the steps of:

a) illuminating the plate system with a light beam via a writing optical fiber, the light beam having a focal point generally at the plate;
b) measuring the intensity of the light reflected from the plate system and collected by a focus optical fiber;
c) altering the relative position of the edge and the light beam; and
d) repeating steps a) - c) until the measured intensity is above or below a predefined threshold.

There is also provided in accordance with a preferred embodiment of the present invention an apparatus for detecting an abrupt rising edge between a first smooth surface and a second smooth surface. The apparatus includes:

means for illuminating one of the first surface and the second surface with a light beam having a focal point generally at the second surface;
means for measuring the intensity of the light reflected from the illuminated surface, the measured intensity being greater for light reflected from the first surface than for light reflected from the second surface; and
means for altering the relative position of the edge and the light beam.

Moreover, the means for illuminating includes a laser diode and optionally an optical fiber connected thereto.
Furthermore, the means for measuring comprises a photodiode and optionally another optical fiber connected thereto.
Additionally, the apparatus further includes at least one lens for focusing the light beam.
Similarly, there is also provided an apparatus for detecting the edge of a plate mounted on a support. Moreover, the support is a drum or a flat bed.
There is also provided in accordance with a preferred embodiment of the present invention an apparatus for detecting the angle of the edge of a plate mounted on a support. The plate and support form a plate system, and the apparatus includes: means for illuminating the plate system with a light beam having a focal point generally at the plate; means for measuring the intensity of the light reflected from the plate system; means for altering the relative position of the edge and the light beam in a first direction; and means for altering the relative position of the edge and the light beam in a second direction transverse to the first direction.
There is also provided in accordance with a preferred embodiment of the present invention an apparatus for detecting the angle of the edge of a plate mounted on a support. The plate and support form a plate system, and the apparatus includes: means for illuminating the plate system with a light beam having a focal point generally at the plate; means for making a first series and a second series of measurements of the intensity of the light reflected from the plate system; means for altering the relative position of the edge and the light beam in a first direction; and means for altering the relative position of the edge and the light beam in a second direction transverse to the first direction.

There is also provided in accordance with a preferred embodiment of the present invention an apparatus for detecting the edge of a plate mounted on a support, the plate and the support forming a plate system. The apparatus includes an optical print head for illuminating the plate system with a light beam having a focal point generally at the plate, a detector for measuring the intensity of the light reflected from the plate system, and means for altering the relative position of the edge and the light beam.

Moreover, the optical print head includes a laser diode and a writing optical fiber connected to the laser diode.

Finally, the optical print head includes a focus optical fiber and the detector includes a photodiode connected to the focus optical fiber.

## BRIEF DESCRIPTION OF THE DRAWINGS

The present invention will be understood and appreciated more fully from the following detailed description taken in conjunction with the appended drawings in which:

Figs. 1A and 1B are illustrations of two smooth surfaces having an abrupt rising edge of height H between them, which is helpful in understanding the present invention;

Figs. 2A and 2B are illustrations of the apparatus for edge detection, according to a preferred embodiment of the present invention;

Fig. 3 is a schematic illustration of a graph of the voltage signal produced by electronic circuitry as a function of the position of the apparatus of Fig. 2 relative to the edge;

Fig. 4 is a schematic illustration of the apparatus for edge detection for use in a printing system, according to another preferred embodiment of the present invention;

Fig. 5 is a schematic illustration of the optical print head of Fig. 4;

Fig. 6A is a schematic illustration of a plate on a flat bed, according to a further preferred embodiment of the present invention; and

Fig. 6B is a schematic illustration of a plate on a drum, according to a further preferred embodiment of the present invention.

## DETAILED DESCRIPTION OF THE PRESENT INVENTION

The present invention is directed to an apparatus and method for detecting with very high resolution an abrupt rising edge between two smooth surfaces. The present invention is also directed to an apparatus and method for detecting with very high resolution the edge between a plate and a plate support in a platesetter, using the existing arrangement of an optical print head.

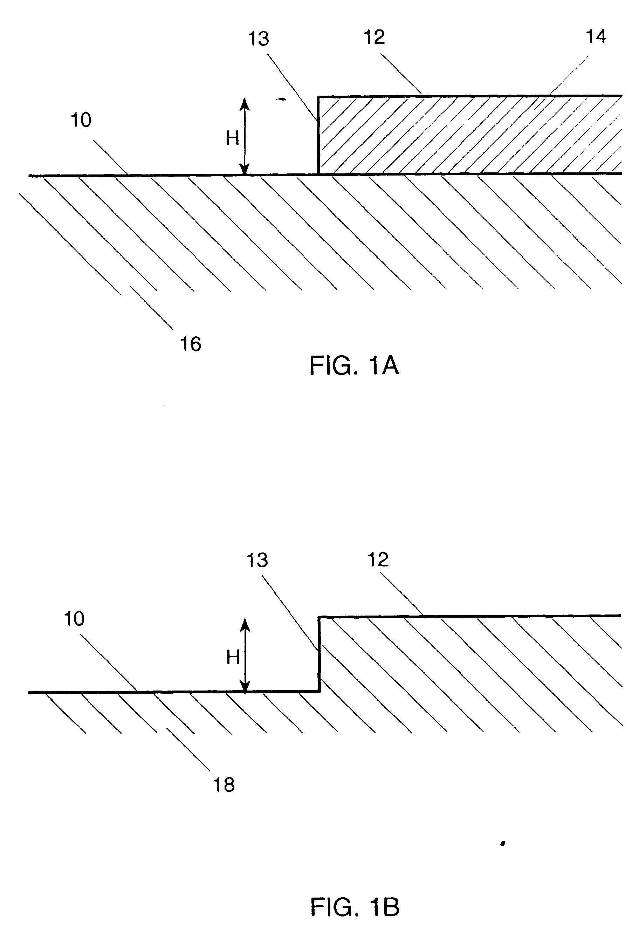

As shown in Figs. 1A and 1B, to which reference is now made, there is an abrupt rising edge 13 of height H between a first smooth surface 10 and a second smooth surface 12. The edge 13 may occur, as in Fig. 1A, due to the placement of a sheet 14 on the smooth surface of a body 16. Alternatively, as in Fig. 1 B, the edge 13 may occur in a single body 18.

The apparatus comprises an illumination unit and a light detector. An example of the illumination unit is a laser diode. Another example is a laser diode connected to an optical fiber. The light detector may have an optical fiber connected to it for collection of the light to be detected.

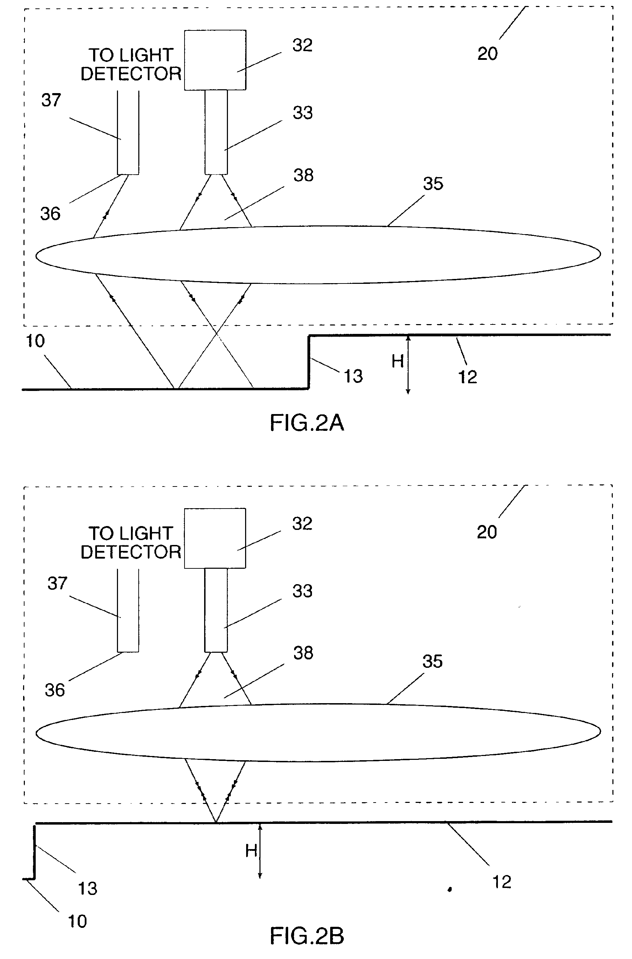

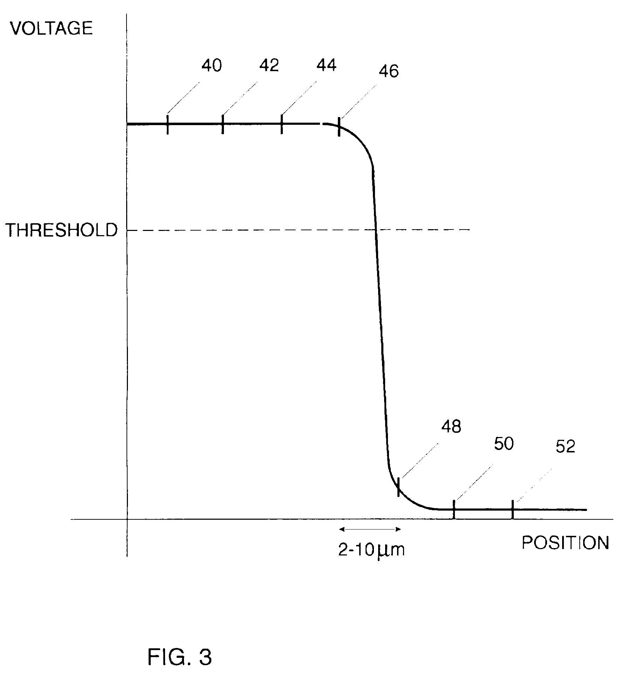

Reference is now made to Figs. 2A and 2B, which are schematic illustrations of an apparatus 20 for edge detection, according to a preferred embodiment of the present invention. A laser diode 32 is connected to an optical fiber 33. A second optical fiber 37 is proximate the optical fiber 33 and is connected to a light detector (not shown). The light detector may be, for example, a photodiode that generates electrical current which is translated to a voltage signal by electronic circuitry (not shown). Reference is made additionally to Fig. 3, which is a schematic illustration of a graph of the voltage signal produced by the electronic circuitry as a function of the position of the apparatus 20 of Fig. 2 relative to the edge.

The apparatus 20 also comprises a telecentric lens assembly 35. In operation, light from the laser diode 32 is carried through the optical fiber 33, and the light beam 38 emitted from the optical fiber 33 is directed towards the surfaces 10 and 12 by the lens assembly 35. As shown in Fig. 2A, when the optical fiber 33 of the apparatus 20 is to the left of the edge 13, the light beam 38 is not in focus on the surface 10. Hence, a significant part of this light is reflected back from the surface 10 towards the lens 35 assembly, and is focused by the lens assembly 35 on the surface end 36 of the optical fiber 37. This light collected by the optical fiber 37 is transmitted to the photodiode, and, as shown in Fig. 3 by the voltage measurements 40, 42, 44 and 46, the voltage signal produced by the electronic circuit is relatively strong.

As shown in Fig. 2B, when the optical fiber 33 of the apparatus 20 is in front of the surface 12, the light beam 38 is in focus on the surface 12. Hence, most of the light reflected back from the surface 12 is focused by the lens assembly 35 onto the surface end of the optical fiber 33. Only a very small portion of the reflected light arrives at the end of the optical fiber 37, and from it through the optical fiber 37 to the photodiode. Therefore, as shown in Fig. 3 by the voltage measurements 48, 50 and 52, the voltage signal produced by the electronic circuit is relatively weak.

Accordingly, the voltage signal produced by the electronic circuit will change abruptly when the apparatus crosses the edge 13 of the surfaces 10 and 12. If the apparatus 20 is moved from illuminating the surface 10 to illuminating the surface 12, then the position of the apparatus 20 when the voltage drops below a predetermined threshold indicates the location of the edge 13. If the apparatus 20 is moved from illuminating the surface 12 to illuminating the surface 10, then the position of the apparatus 20 when the voltage rises above a predetermined threshold indicates the location of the edge 13.

When the lens assembly 35 magnifies the image by a factor of 0.5, the edge detection apparatus of the present invention performs optimally when the distance between the optical fiber 33 and the optical fiber 37 is approximately the same as the height of the edge 13.

It will be appreciated that the apparatus and method of the present invention are capable of detecting the edge also when the illuminating light beam has a focal point which is very near but not precisely at the surface 12.

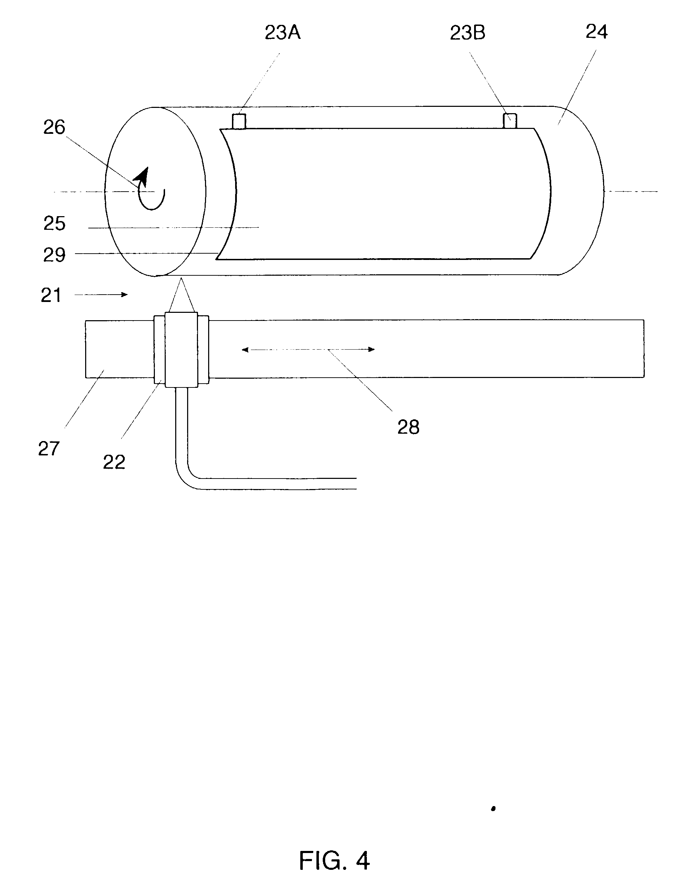

A particular application of the present invention is to detect the edge of a medium to be exposed in a printing system, the medium mounted on a support which is part of the printing system. For example, the printing system may be a platesetter and the medium to be exposed is a plate. Reference is now made to Fig. 4, which is a schematic illustration of a printing system 21, according to a preferred embodiment of the present invention. The printing system 21 comprises an optical print head 22, and a plate support 24. The support 24 may be a drum or a flat bed. In the case of a drum, the plate may be mounted on the exterior surface of the drum, or on the interior surface of the drum. The following discussion will describe the example of an exterior drum for the support 24, although it is understood that any other suitable plate support is included in the scope of the present invention.

The optical print head 22 is movable along a guiding support 27, as indicated by arrow 28. A plate 25 to be exposed by the optical print head 22 is mounted on the drum 24 against two fixed pins 23A and 23B, and is secured to the drum 24 by conventional clamping means (not shown). The plate 25 has an edge 29, whose position has to be detected with an accuracy of 20 microns (μm) or better.

During exposure, the drum 24 rotates on its axis as indicated by arrow 26, while the optical print head 22 moves along the guiding support 27, thereby exposing a plate 25 mounted on the drum 24 in a line by line fashion.

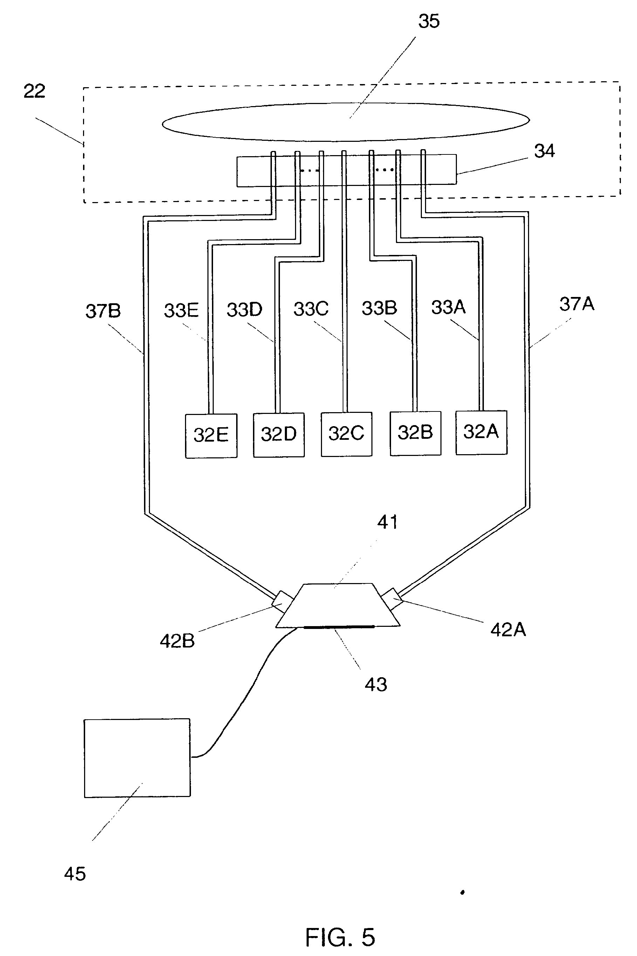

Reference is now made to Fig. 5, which is a schematic illustration of the optical print head of Fig. 4. The optical print head 22 comprises an array of infrared (IR) laser diodes 32, of which, for example, five are referenced 32A - 32E. It will be understood that there can be many more than five laser diodes in the optical print head 22.

Each laser diode 32 is attached to a corresponding optical fiber 33A - 33E, known as the writing fibers. The attachment may be, for example, a pigtail type attachment, as is known in the art, or any other suitable type of attachment. The light emitting ends of the optical fibers 33 are aligned in an assembly 34. Preferably, the optical fibers 33 are aligned in the assembly 34 in a linear array with predetermined spacings therebetween.

The light from all IR laser diodes 32, which is modulated in accordance to the information representing the image to be printed, is focused on the plate 25 by a telecentric lens assembly 35, as is known in the art. It will be appreciated that any variation of the lens assembly 35 which images the light from the assembly 34 onto the plate 25 is within the scope of the present invention.

The optical print head 22 comprises two additional optical fibers 37A and 37B positioned on either side of the writing optical fibers 33. The other ends of the optical fibers 37A and 37B are connected to a metal housing 41 via connectors 42A and 42B. The optical fibers 37A and 37B and the connectors 42A and 42B are already present in the optical print head 22 for the purpose of focussing prior to imaging. For example, this is the arrangement of the optical print head for the commercially available platesetter Lotem from Scitex Corporation of Herzliya, Israel. The present invention makes use of the existing fiber arrangement in the optical print head of a platesetter in order to perform edge detection of the plate.

The metal housing 41 contains a photodiode 43. The light coming out of either optical fiber 37A or 37B is directed to the surface of the photodiode 43, generating electrical current which is translated to a voltage signal by an electronic circuit 45.

In operation, light is emitted from one of the extreme laser diodes 32A, 32E via the corresponding optical fiber 33A, 33E. The optical print head 22 is moved along the guiding support 27. As explained hereinabove with respect to Figs. 2A, 2B and 3, the voltage signal produced by the electronic circuit 45 will change abruptly when the optical print head 22 crosses the edge 29 of the plate 25. The position of the optical print head 22 when this signal change is detected indicates the position of the plate 25 relative to the drum 24. Exposing the image on the plate 25 relatively to the edge detected by the apparatus will guarantee that all the color separations of a color job will be in perfect registration on the press.

Furthermore, since the voltage signal produced when the optical print head 22 is over the plate 25 is very small, different plate types will have almost no effect on the level of this signal. Therefore, the edge detection apparatus of the present invention is not sensitive to the plate type.

According to a preferred embodiment of the present invention, two optical fibers 37A and 37B are connected to the metal housing 41 of photodiode 43 in order to provide redundancy. If the laser diode used for edge detection (for example, 32E) fails, the system can continue working by operating the other extreme laser diode (32A) instead of the failed laser diode. The connection of both optical fibers 37A and 37B to the same metal housing 41 enables this redundancy. The metal housing 41 is specially designed in order to enable detecting by a single photodiode 43 the light coming from both fibers 37A and 37B. According to a preferred embodiment of the present invention, the fibers 37A and 37B are connected at an angle of 45° relative to the plane of the photodiode 43, and are equidistant from the photodiode 43.

For systems such as platesetters, one of the important parameters of the system is its throughput. In order to affect the throughput as little as possible, the time dedicated to plate edge detection should be minimized. Since time is required for the drum to achieve its correct rotational speed, it is preferable to perform the edge detection while the drum is spinning; in this case, the imaging can start immediately after detecting the plate edge.

According to a preferred embodiment of the present invention, a method for detecting the edge of a plate in the printing system of Fig. 4 is performed in two stages. In the first stage, the optical print head 22 moves quickly along the guiding support 27 and the edge is detected with low accuracy. The optical print head 22 is then moved backward and the second stage begins. In the second stage, the optical print head 22 moves a smaller distance in the vicinity of the edge, the optical print head 22 moving along the guiding support 27 at a much lower speed which is dictated by the required detection accuracy.

According to a preferred embodiment of the present invention, the optimal speed V in millimeters per second (mm/sec) of the optical print head 22 along the guiding support 27 for the first stage of the method is given by the following equation:

$$V = DS \sqrt{\frac{d \cdot \delta}{540}},$$

where $DS$ is the drum speed in revolutions per minute (rpm), $d$ is the uncertainty of the edge position in mm, and $\delta$ is the required detection accuracy in mm.

Referring briefly back to Fig. 3, when the support is a drum, the difference in the position of the apparatus between voltage measurements can be as low as 2 - 10 microns ($\mu$m), and therefore the location of the edge can be detected within the required accuracy of 20 microns ($\mu$m). When the support is a flat bed, the location of the edge can be detected with even higher accuracy.

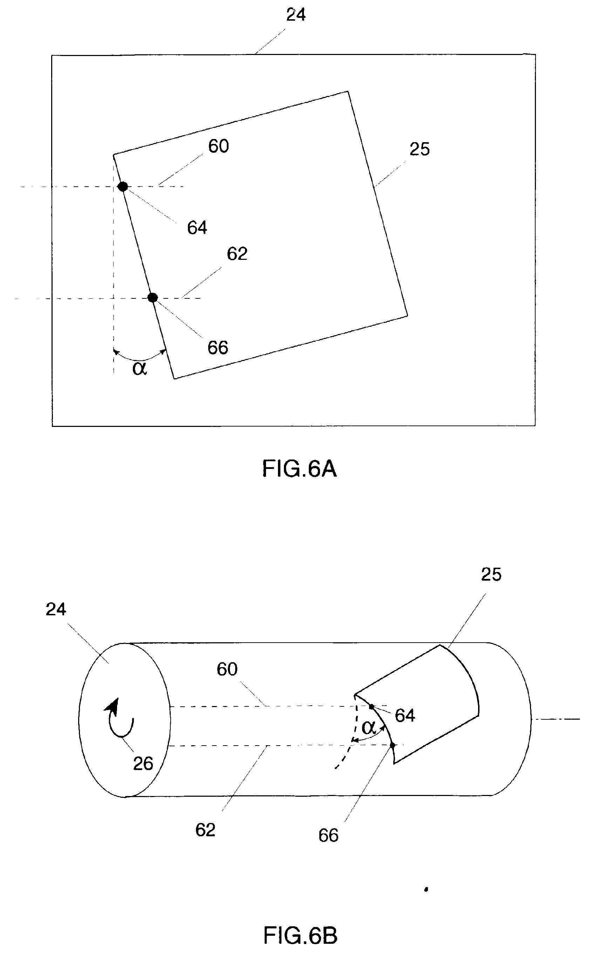

According to a further preferred embodiment of the present invention, the apparatus can be used to detect the mounting angle of the plate 25 on the plate support 24. Reference is now made additionally to Figs. 6A and 6B, which are schematic illustrations of a plate 25 on a flat bed 24 and a drum 24, respectively. The plate 25 is misaligned by an angle of $\alpha$. The optical print head 22 (Fig. 4) can be moved along the guiding support 27 (Fig. 4) for two lines 60 and 62, thereby detecting the edge at locations 64 and 66, respectively. The plate angle a can be calculated from the detected locations 64 and 66.

In the case of Fig. 6A, the optical print head 22 is moved in a first direction corresponding to line 60, thereby detecting the edge at location 64. Then the optical print head is moved in a second direction transverse to the first direction, thus positioning it over a point of line 62. Finally, the optical print head is moved again in the first direction, now corresponding to line 62, thereby detecting the edge at location 66. The plate angle $\alpha$ can be calculated from the detected locations 64 and 66.

In the case of Fig. 6B, for each rotation of the drum 24 around its axis, as indicated by arrow 26, the optical print head makes a measurement at a point on line 60 and a measurement at a point on line 62. As the optical print head moves in a first direction parallel to the drum axis, it continues making measurements at points on line 60 and line 62. When the optical print head crosses the edge at line 60, it detects the edge at location 64. When the optical print head crosses the edge at line 62, it detects the edge at location 66. The plate angle $\alpha$ can be calculated from the detected locations 64 and 66.

According to a further preferred embodiment of the present invention, the edge detection apparatus can be used for detecting the plate edge parallel to the axis of the drum. In this case, the optical print head 22 does not move, and the drum rotates in front of the optical print head 22. When the plate edge crosses the detecting beam, the signal of the photodiode changes dramatically. The position of the drum while this signal change is detected determines the position of the plate edge parallel to the drum axis.

It will be appreciated by persons skilled in the art that the present invention is not limited by what has been particularly shown and described herein above, rather the scope of the invention is defined by the claims that follow.

## Claims

**1.** A method for detecting an abrupt rising edge from a first smooth surface to a second smooth surface, the method comprising the steps of:

a) illuminating one of said first surface and said second surface with a light beam having a focal point generally at said second surface;
b) measuring the intensity of the light reflected from the illuminated surface, the measured intensity being greater for light reflected from said first surface than for light reflected from said second surface;
c) altering the relative position of said edge and said light beam; and
d) repeating steps a) - c) until the measured intensity is above or below a predefined threshold.

**2.** A method according to claim 1, wherein said method is irrespective of the reflectivity of said second surface.

**3.** A method for detecting the angle of an abrupt rising edge between a first smooth surface and a second smooth surface, the method comprising the steps of:

a) illuminating one of said first surface and said second surface with a light beam having a focal point generally at said second surface;
b) measuring the intensity of the light reflected from the illuminated surface;
c) altering the relative position of said edge and said light beam in a first direction;
d) repeating steps a) - c) until the measured intensity is above or below a predefined threshold, thereby determining the location of said edge at a first position;
e) altering the relative position of said edge and said light beam in a second direction transverse to said first direction;
f) repeating steps a) - c) until the measured intensity is above or below a predefined threshold, thereby determining the location of said edge at a second position; and
g) calculating said angle from said first position and said second position.

**4.** A method for detecting the angle of an abrupt rising edge between a first smooth surface and a second smooth surface, the method comprising the steps of:

a) illuminating one of said first surface and said second surface with a light beam having a focal point generally at said second surface;

b) making one of a first series of measurements of the intensity of the light reflected from the illuminated surface, said measurements being greater for light reflected from said first surface than for light reflected from said second surface;
c) altering the relative position of said edge and said light beam in a first direction;
d) illuminating one of said first surface and said second surface with said light beam;
e) making one of a second series of measurements of the intensity of the light reflected from the illuminated surface;
f) altering the relative position of said edge and said light beam in a second direction transverse to said first direction;
g) repeating steps a) - f) until one of said first series of measurements is above or below a predefined threshold, thereby determining the location of said edge at a first position and one of said second series of measurements is above or below a predefined threshold, thereby determining the location of said edge at a second position; and
h) calculating said angle from said first position and said second position.

**5.** A method according to any of claims 3 and 4, wherein the measured intensity is greater for light reflected from said first surface than for light reflected from said second surface.

**6.** A method for detecting the edge of a plate mounted on a support, the plate and support forming a plate system, the method comprising the steps of:

a) illuminating said plate system with a light beam having a focal point generally at said plate;
b) measuring the intensity of the light reflected from said plate system, the measured intensity being greater for light reflected from said support than for light reflected from said plate;
c) altering the relative position of said edge and said light beam; and
d) repeating steps a) - c) until the measured intensity is above or below a predefined threshold.

**7.** A method according to claim 6, wherein said method is irrespective of the reflectivity of said plate and/or wherein said support is a drum or a flat bed.

**8.** A method for detecting the angle of the edge of a plate mounted on a support, the plate and support forming a plate system, the method comprising the steps of:

a) illuminating said plate system with a light beam having a focal point generally at said plate;

b) measuring the intensity of the light reflected from said plate system;

c) altering the relative position of said edge and said light beam in a first direction;

d) repeating steps a) - c) until the measured intensity is above or below a predefined threshold, thereby determining the location of said edge at a first position;

e) altering the relative position of said edge and said light beam in a second direction transverse to said first direction;

f) repeating steps a) - c) until the measured intensity is above or below a predefined threshold, thereby determining the location of said edge at a second position; and

g) calculating said angle from said first position and said second position.

9. A method according to claim 8, wherein said support is a flat bed.

10. A method for detecting the angle of the edge of a plate mounted on a support, the plate and the support forming a plate system, the method comprising the steps of:

a) illuminating said plate system with a light beam having a focal point generally at said plate;

b) making one of a first series of measurements of the intensity of the light reflected from said plate system;

c) altering the relative position of said edge and said light beam in a first direction;

d) illuminating said plate system with said light beam;

e) making one of a second series of measurements of the intensity of the light reflected from the illuminated surface;

f) altering the relative position of said edge and said light beam in a second direction transverse to said first direction;

g) repeating steps a) - f) until one of said first series of measurements is above or below a predefined threshold, thereby determining the location of said edge at a first position and one of said second series of measurements is above or below a predefined threshold, thereby determining the location of said edge at a second position; and

h) calculating said angle from said first position and said second position.

11. A method according to any of claims 8 and 10, wherein the measured intensity is greater for light reflected from said support than for light reflected from said plate.

12. A method according to claim 10, wherein said support is a drum.

13. A method for detecting the edge of a plate mounted on a support, the plate and the support forming a plate system, the method comprising the steps of:

a) illuminating said plate system with a light beam via a writing optical fiber, said light beam having a focal point generally at said plate;

b) measuring the intensity of the light reflected from said plate system and collected by a focus optical fiber;

c) altering the relative position of said edge and said light beam; and

d) repeating steps a) - c) until the measured intensity is above or below a predefined threshold.

14. An apparatus for detecting an abrupt rising edge between a first smooth surface and a second smooth surface, the apparatus comprising:

means for illuminating one of said first surface and said second surface with a light beam having a focal point generally at said second surface;

means for measuring the intensity of the light reflected from the illuminated surface, the measured intensity being greater for light reflected from said first surface than for light reflected from said second surface; and

means for altering the relative position of said edge and said light beam.

15. An apparatus according to claim 14, further comprising at least one lens for focusing said light beam.

16. An apparatus for detecting the edge of a plate mounted on a support, the plate and support forming a plate system, the apparatus comprising:

means for illuminating said plate system with a light beam having a focal point generally at said plate;

means for measuring the intensity of the light reflected from said plate system; and

means for altering the relative position of said edge and said light beam.

17. An apparatus according to claim 16, wherein said support is a drum or a flat bed.

18. An apparatus for detecting the angle of the edge of a plate mounted on a support, the plate and support forming a plate system, the apparatus comprising:

means for illuminating said plate system with a light beam having a focal point generally at said plate;
means for measuring the intensity of the light reflected from said plate system;
means for altering the relative position of said edge and said light beam in a first direction; and
means for altering the relative position of said edge and said light beam in a second direction transverse to said first direction.

19. An apparatus according to claim 18, wherein said support is a flat bed.

20. An apparatus for detecting the angle of the edge of a plate mounted on a support, the plate and the support forming a plate system, the apparatus comprising:

means for illuminating said plate system with a light beam having a focal point generally at said plate;
means for making a first series and a second series of measurements of the intensity of the light reflected from said plate system;
means for altering the relative position of said edge and said light beam in a first direction; and
means for altering the relative position of said edge and said light beam in a second direction transverse to said first direction.

21. An apparatus according to claim 20, wherein said support is a drum.

22. An apparatus according to any of claims 14,16,18 and 20, wherein said means for illuminating comprises a laser diode or comprises a laser diode and an optical fiber connected thereto.

23. An apparatus according to any of claims 14,16,18 and 20, wherein said means for measuring comprises a photodiode or comprises a photodiode and another optical fiber connected thereto.

24. An apparatus for detecting the edge of a plate mounted on a support, the plate and the support forming a plate system, the apparatus comprising:

an optical print head for illuminating said plate system with a light beam having a focal point generally at said plate;
a detector for measuring the intensity of the light reflected from said plate system; and
means for altering the relative position of said edge and said light beam.

25. An apparatus according to claim 24, wherein said optical print head comprises a laser diode and a writing optical fiber connected to said laser diode.

26. An apparatus according to any of claims 24 - 25, wherein said optical print head comprises a focus optical fiber and said detector comprises a photodiode connected to said focus optical fiber.

13    12    14

10

H

16

FIG. 1A

13    12

10

H

18

FIG. 1B

FIG.2A

FIG.2B

FIG. 3

EP 1 081 458 A2

23A          23B          24

26

25

29

21

27    22

28

FIG. 4

FIG. 5

FIG.6A

FIG.6B